# EUROPEAN PATENT APPLICATION

(11) **EP 3 351 338 A1**
(43) Date of publication of application: **25.07.2018**
(21) Application number: 17203579.2
(22) Date of filing: 24.11.2017
(51) Int. Cl.: B23K 20/12, C22C 21/00, B23K 103/10, B23K 101/00

(54) **BONDED MEMBER AND METHOD OF MANUFACTURING THE SAME**

(30) Priority: 01.12.2016 JP 2016234291
(71) Applicant: Kabushiki Kaisha Toyota Chuo Kenkyusho, Nagakute-shi, Aichi 480-1192 (JP)
(72) Inventor: MATSUOKA, Hideaki, Nagakute-shi, Aichi 480-1192 (JP); HOTTA, Yoshihiro, Nagakute-shi, Aichi 480-1192 (JP); YAMADA, Tomohisa, Nagakute-shi, Aichi 480-1192 (JP); ITOH, Kazuhiko, Nagakute-shi, Aichi 480-1192 (JP)
(74) Representative: Kramer Barske Schmidtchen Patentanwälte PartG mbB

(57) **Abstract**

[Problems] An object is to provide a method of bonding aluminum alloy members which is less likely to affect the mother material and can ensure high bonding strength even without performing heat treatment or the like.

[Solution] The present invention provides a method that includes a bonding step of performing friction stir welding of at least a first member (Wl) and a second member (W2). At least one of the first member and the second member comprises an expanded material of an aluminum alloy. When the aluminum alloy as a whole is 100 mass% (simply referred to as "%"), the aluminum alloy comprises 2-7% Fe, 0.2-1.5% Zr, 0.15-1.2% Ti, 0.2-2.5% Mg, and the balance of A1 and incidental impurities. The bonded member thus obtained is suitable, for example, for a forged piston with a cooling channel which is obtained by friction stir welding of an annular assembly to a forged main body.

## Description

### [Technical Field]

The present invention relates to a bonded member obtained by friction stir welding of a plurality of members and also to a method of manufacturing the same.

### [Background Art]

As the environment awareness rises in recent years, the field of transporters, such as automobiles, motorcycles and aircraft, strongly requires improvement of fuel efficiency, reduction of CO₂ emissions, etc. To this end, internal-combustion engines (simply referred to as "engines") as main drive sources of such transporters are also required to have a high specific output (output per unit engine displacement). As a consequence, the temperature and pressure (in-cylinder pressure) of combustion gases of engines tend to be increasingly high.

To respond to such a tendency, it is proposed to provide a cooling channel in the head of a piston as the main functional component of an engine. The cooling channel is an internal oil passage formed in the head and having a closed annular shape or other appropriate shape. The cooling channel ordinarily operates in a process in which an oil jet disposed in the crankcase splashes the engine oil to the back side of a piston so that the engine oil flows into the cooling channel, circulates in the cooling channel, and flows out (discharges) from the cooling channel. This process is repeated to suppress the overheating in the vicinity of the head exposed to the combustion gas (in the vicinity of the top surface (including the cavity) to the top land).

As is known in the art, if steel is used as the material of such a piston, the introduced engine oil will be excessively heated to undergo carbonization (coking) and the like due to the low heat conductivity of steel and the cooling channel may get blocked. Such blocking in the cooling channel may finally cause breakage of the piston due to the thermal fatigue because the vicinity of the head cannot be cooled and becomes high temperatures which may lead to decarburization and delamination of oxidized scale. For this reason, pistons with cooling channels may preferably be made of an aluminum alloy which is excellent in the heat conductivity.

In die-cast pistons of an aluminum alloy, however, properties such as the high-temperature strength (simply referred to as "heat resistance") may be insufficient and limitations exist in achieving a high specific output, high in-cylinder pressure and the like of engines. In such a usage environment, forged pistons of an aluminum alloy are sometimes used. In cases of the forged pistons, however, it is generally difficult or impossible to form a cooling channel using a fusible core (such as a salt core) which may be used for the die-cast pistons.

In cases of the forged pistons, therefore, two members are bonded together to manufacture a forged piston in which an internal oil passage is formed when the members are integrated. For example, Patent Literature 1, 2 listed below describes such a forged piston with a cooling channel.

### [Prior Art Literature]

### [Patent Literature]

[Patent Literature 1] JP2007-270812A
[Patent Literature 2] JP2007-270813A
[Patent Literature 3] JP5556723B

### [Summary of the Invention]

### [Problems to be solved by the Invention]

Patent Literature 1, 2 describes forming a cooling channel by electron beam welding of a head annular part and a piston main body. The head annular part and the piston are obtained by forging billets that are composed of an extruded material of a rapidly-quenched powder comprising a Si-containing aluminum alloy. Patent Literature 1, 2 also describes that brazing is preferred to avoid melt welding (liquid-phase bonding).

A bonding site obtained by melt welding is composed of a die-cast structure and, therefore, the strength is considerably lower than that of a forged mother material in general. When a forged piston is composed of a heat-treatment-type aluminum alloy, it may be considered to perform heat treatment (such as solution treatment and aging treatment) after welding to recover the strength and the like of the bonding site. However, such heat treatment after welding may not be preferred in the method of manufacturing a piston as a precision component because the heat treatment may cause thermal strain and other defects. On the other hand, a forged piston obtained by brazing does not have sufficient bonding strength and lacks reliability when used under a severe cylinder environment.

Patent Literature 3 describes an aluminum alloy that is excellent in the high-temperature properties such as strength in high temperatures. However, Patent Literature 3 is silent about a bonding method, a bonded member (e.g. a forged piston with a cooling channel), etc. using the aluminum alloy.

The present invention has been made in consideration of such circumferences and an object of the present invention is to provide a bonded member in which aluminum alloy members are bonded together via a high-strength bonding site. Another object of the present invention is to provide a method of manufacturing the bonded member.

### [Means for solving the Problems]

As a result of intensive studies to achieve the above objects, the present inventors have newly found that, when the friction stir welding (simply referred to as "FSW") which is one type of solid-phase bonding is performed for expanded materials (such as extruded materials and forged materials) of a specific aluminum alloy (simply referred to as an "A1 alloy"), a bonding site having hardness (strength) comparable with that of the mother material is obtained and a heat-affected region due to FSW is considerably small in the mother material. Developing this achievement, the present inventors have accomplished the present invention as will be described hereinafter.

### «Method of Manufacturing Bonded Member»

(1) The present invention provides a method of manufacturing a bonded member. The method comprises a bonding step of performing friction stir welding of at least a first member and a second member. At least one of the first member and the second member comprises an expanded material of an aluminum alloy. When the aluminum alloy as a whole is 100 mass% (simply referred to as "%"), the aluminum alloy comprises 2-7% Fe, 0.2-1.5% Zr, 0.15-1.2% Ti, and the balance of A1 and incidental impurities.
(2) According to the method of manufacturing (simply referred to as a "bonding method") of the present invention, even when heat treatment or the like is not performed, a bonded member is obtained in which at least two members are bonded via a bonding site having high properties comparable with those of the mother material existing around the bonding site almost without deteriorating properties of the mother material. The reason that such excellent bonding is possible appears to be because specific solid-phase bonding (friction stir welding) is performed for a characteristic A1 alloy that is excellent in the high-temperature properties and the like. The friction stir welding is performed by pressing a tool having a shoulder and a probe against a site to be bonded between a first member and a second member while rotating the tool. The shoulder abuts against a surface of the first member or the second member. The probe protrudes from the shoulder and can be buried into the site to be bonded between the first member and the second member.

### «Bonded Member»

The present invention can be perceived not only as the above-described method of manufacturing but also as a bonded member. That is, the present invention can be perceived as a bonded member comprising a first member, a second member, and a bonding site obtained by friction stir welding of the first member and the second member. At least one of the first member and the second member comprises an expanded material of an aluminum alloy. When the aluminum alloy as a whole is 100 mass% (simply referred to as "%"), the aluminum alloy comprises 2-7% Fe, 0.2-1.5% Zr, 0.15-1.2% Ti, and the balance of A1 and incidental impurities.

### «Others»

(1) As used in the present description, the "mother material" refers to a portion other than the bonding site which portion constitutes each member. In other words, the mother material is a base material (Al alloy) before the friction stir welding or a base material that is located around the bonding site and is not substantially affected (in particular, thermally affected) by the friction stir welding.
(2) The members to be bonded according to the present invention may have the same material and shape or may also have different materials and shapes. When the same-quality and same-shape members of the Al alloy according to the present invention are bonded, a long and large-scale bonded member can be obtained. When different-shape members are bonded, a bonded member having a complex shape can be obtained. When different-quality members are bonded, a bonded member can be obtained of which a certain part is applicable to a suitable place with high functionality.
(3) The "joint efficiency" refers to a ratio of the property (hardness or strength) of the bonding site to the property of the above-described mother material. In the case of the bonded member according to the present invention, the joint efficiency in relation to the hardness measured in an ordinary temperature (room temperature) region can be 0.7 or more in an embodiment, 0.8 or more in another embodiment, and 0.9 or more in still another embodiment. It suffices to say that the upper limit may be 0.95 or less in an embodiment and 1 or less in another embodiment.
   The hardness of the bonding site may vary depending on the hardness of the mother material, bonding conditions and other conditions, but in the bonding site according to the present invention, the Vickers hardness can be, for example, 120 HV or more in an embodiment, 130 HV or more in another embodiment, 140 HV or more in still another embodiment, and 145 HV or more in yet another embodiment.
   As used in the present description, the "hardness" of the bonding site refers to the Vickers hardness of a middle part in the depth direction of the bonding center. The bonding center is located on the axis of rotation of the probe or on the trajectory of the axis of rotation. In general, the bonding site is formed symmetrically in the direction perpendicular to the axis of rotation or its trajectory. The middle part in the depth direction refers to the middle point (or its vicinity) of the depth from the outermost surface of the bonding site (in particular, stirring site) to the deepest part.
(4) As used in the present description, the "site to be bonded" refers to an abutting site or overlapping site before bonding while the "bonding site" refers to a region that is formed after bonding due to FSW of the site to be bonded. The bonding site formed due to the friction stir welding includes a stirring site, a heat processing-affected site (plastic flow site) located around the stirring site, and a heat-affected site located around the heat processing-affected site. The stirring site is composed of a fine recrystallized structure caused in the central region due to stirring by the probe. In the heat processing-affected site, crystalline grains are expanded by being heated and plastically deformed but not to the extent of recrystallization. The heat-affected site is affected only by heating. The peripheral region around the heat-affected site represents an original site (mother material).
   The bonding site according to the present invention has the above-described stirring site and other sites, but the heat processing-affected site and the heat-affected site are small as compared with those of a conventional bonding site due to friction stir welding. This appears to be because the properties (in particular, hardness and strength) of the Al alloy according to the present invention are stable even in a high-temperature range.
(5) As used in the present description, the term FSW encompasses the concept of so-called friction stir spot welding (FSSW). The bonding step according to the present invention may therefore be a step of continuously (linearly) bonding an abutting site between the end part of the first member and the end part of the second member or a step of intermittently bonding an overlapping site (in a spot-like pattern) between the surface part to be bonded of the first member and the surface part to be bonded of the second member. The friction stir welding will be simply referred to as "FSW," hereinafter, including the FSSW. It should be noted that FSW is abbreviation of friction stir welding, but consistently represents one type of solid-phase bonding rather than melt welding (liquid-phase bonding) in which the bonding site is heated to a temperature equal to or higher than the melting point of an Al alloy.
(6) Unless otherwise stated, a numerical range "x to y" as referred to in the present description includes the lower limit value x and the upper limit value y. Various numerical values or any numerical value included in numerical ranges described in the present description may be selected or extracted as a new lower limit value or upper limit value, and any numerical range such as "a to b" may thereby be newly provided using such a new lower limit value or upper limit value.

### [Brief Description of Drawings]

FIG. 1A is a set of plan view and side elevational view illustrating a bonding apparatus used for manufacturing samples.
FIG. 1B is a half cross-sectional view illustrating the substantial part of a bonding tool used for FSW wherein the right-hand side cross-sectional view illustrates a state in which the bonding tool is provided with a travel angle.
FIG. 2A is a graph illustrating the tensile strength of a bonded sample at each temperature.
FIG. 2B is a graph illustrating the 0.2% proof stress of a bonded sample at each temperature.
FIG. 2C is a graph illustrating the fracture elongation of a bonded sample at each temperature.
FIG. 3 is a graph illustrating the hardness of a bonding site and the joint efficiency when the bonding condition (tool rotating speed) is varied.
FIG. 4A is a graph illustrating the hardness distribution in the bonding site and its vicinity.
FIG. 4B is a graph illustrating regions affected by FSW.
FIG. 5A is a microscope photograph of a cross section of a bonding site subjected to FSW and its vicinity.
FIG. 5B is a set of SEM images illustrating the metallographic structures of a bonding site (stirring site) and a mother material.
FIG. 6 is a schematic view illustrating a manufacturing process for a forged piston with a cooling channel subjected to FSW.

### [Embodiments for Carrying out the Invention]

The contents described in the present description can be applied not only to the bonded member of the present invention but also to a method of manufacturing the bonded member. One or more features freely selected from among the matters described in the present description can be added to the above-described features of the present invention. Features regarding a method can also be features regarding a product under a certain situation. Which embodiment is the best or not is different in accordance with objectives, required performance, and other factors.

### «Bonding Step»

(1) The bonding step according to the present invention is carried out by friction stir welding (FSW). The tool used in FSW has a columnar or cylindrical shaft body (shank), a shoulder that is composed of an end surface of the shaft body and can abut against surfaces of members to be bonded (a first member and a second member, also simply referred to as "workpieces"), and a probe (also referred to as a "pin") that protrudes or can protrude from the shoulder. FSW is carried out by rotating the probe in a state of being buried in a bonding site (abutting site or overlapping site) between the workpieces while pressing the rotating tool (shoulder) toward the workpieces. During this operation, the site to be bonded between the workpieces is softened (deformation resistance decreases) due to friction heat caused by the shoulder and/or probe in sliding contact with the workpieces. In this state, the probe stirs the mother material of the site to be bonded, which undergoes plastic flow, and the workpieces are bonded to each other due to a newly-formed surface of the site to be bonded.
   When the bonding site is formed linearly along the abutting site between the end part of the first member and the end part of the second member (this case is referred to as a "linear bonding step"), continuous bonding can be achieved by moving the probe, which is buried in the abutting site, along the abutting site while rotating the probe.
   When overlapping sites (in the vicinities of the bonding surface) between the surface to be bonded of the first member and the surface to be bonded of the second member are intermittently bonded (in a spot-like pattern) (this case is referred to as a "spot-like bonding step"), spot-like bonding can be achieved by burying the probe in each overlapping site to be bonded and rotating the probe. The tool used in this operation may be a fixed-type tool in which the probe is integrated with the shoulder or may also be a double action-type tool in which the probe is retractable with respect to the shoulder.
(2) It suffices that the probe has a size to such an extent that stirring occurs in the site to be bonded, and the outer diameter (probe diameter: d) may be, for example, ϕ1-20 mm in an embodiment and may also be ϕ2-16 mm in another embodiment. The probe length (length from the shoulder end surface to the buried probe tip) may be 0.5-2d in an embodiment and may also be 1-1.5d in another embodiment. From another aspect, the probe length may be 0.5-1t with respect to the depth (t) of the site to be bonded in an embodiment and may also be 0.7-0.9t in another embodiment. It suffices that the shoulder has an outer diameter (shoulder diameter: D) to such an extent that the friction heat can heat the periphery of a location in which the probe is buried. For example, the shoulder diameter D may be 2-5d in an embodiment and may also be 2.5-4d in another embodiment. The outer surface of the probe may preferably have a thread-like shape (in particular, reverse thread-like shape) in order to enhance the stirring property.
   The rotating speed of the tool may preferably be 750-1750 rpm in an embodiment and 900-1600 rpm in another embodiment. When the above-described linear bonding step is carried out, the feed speed when moving the tool along the abutting site may preferably be 50-1000 mm/min in an embodiment and 80-500 mm/min in another embodiment, and the travel angle of the tool may preferably be 1-5° in an embodiment and 2-4° in another embodiment. By setting the specs of the tool and the bonding conditions within the above-described ranges, an appropriate bonding step can be carried out while ensuring necessary properties such as the bonding strength.

### «Members to be bonded»

The bonded member is obtained through bonding at least two or more members by friction stir welding. One of the members to be bonded is composed of the Al alloy (expanded material) according to the present invention, but the other may be a metal member or resin member, provided that the friction stir welding is possible. Examples of the metal member include those composed of various metals, such as Al-based, iron-based, magnesium-based, and titanium-based members.

In an embodiment, to ensure necessary properties such as the bonding strength and high-temperature properties of the bonded member as a whole, both the members to be bonded may preferably be composed of an expanded material of the Al alloy according to the present invention.

### «Al alloy/Expanded material»

The Al alloy according to the present invention exhibits such excellent high-temperature properties that it is scarcely softened even when subjected to high temperatures due to friction heat during the bonding step. Specifically, the Al alloy has excellent softening resistance at high temperatures such that the Al alloy stably maintains the hardness (residual hardness) of 130 HV or more in an embodiment, 140 HV in another embodiment, and 150 HV or more in still another embodiment even when heated to about 400°C. Hereinafter, such an Al alloy according to the present invention will be described in detail from the viewpoints of component composition, metallographic structure, properties, etc.

### (1) Component Composition

The Al alloy according to the present invention contains essential elements of Al as the main component as well as Fe, Zr, and Ti and may preferably further contain Mg. These elements are specifically as follows. The composition range of each element is listed with respect to 100 mass% of the Al alloy as a whole.

Fe is contained at 2-7% and may preferably be contained at 2.5-6% in an embodiment and 3-5.5% in another embodiment. Fe forms an intermetallic compound with Al (Al-Fe-based intermetallic compound: first compound phase) in the mother phase (α-Al phase). This first compound phase enhances the strength and/or hardness of the Al alloy. If the content of Fe is unduly low, sufficient strength and/or hardness cannot be obtained, while if the content of Fe is unduly high, the ductility will be poor and the expandability (including the forging property) and/or the workability (including the cutting property, etc.) may be reduced.

Zr and Ti form an Al-(Zr, Ti)-based intermetallic compound of an Ll₂ structure with Al (second compound phase or precipitated phase), which enhances the high-temperature properties of the Al alloy. The reason of this is considered as follows. The previously-described first compound phase causes phase transformation, change of form (coarsening), and the like when subjected to a high-temperature atmosphere for a long period of time and thus may not necessarily be thermally stable. On the other hand, the second compound phase, which is commensurate with the mother phase, appears in the vicinity of the boundary (interface) between the first compound phase and the mother phase and can be stable in a wide temperature range including the high-temperature range. The second compound phase can therefore stably suppress the phase transformation, change of form, and the like caused at high temperatures in the first compound phase which plays a role in the strength and/or hardness of the Al alloy (so-called pinning effect). It can thus be considered that the first compound phase and the second compound phase act in a synergistic manner thereby to allow the Al alloy of the present invention to exhibit excellent high-temperature properties (such as softening resistance and heat resistance).

Zr is contained at 0.2-1.5% and may preferably be contained at 0.6-1.2% in an embodiment. Ti is contained at 0.15-1.2% and may preferably be contained at 0.3-0.8% in an embodiment. If the content of Zr or Ti is unduly low, the above-described effects cannot be satisfactorily obtained, while if the content of Zr or Ti is unduly high, the expandability and/or workability of the Al alloy may be reduced. When the content of Zr is higher than the content of Ti, in particular, when the mass ratio of Zr to Ti (Zr/Ti) is 1.1-1.5 in an embodiment and 1.15-1.4 in another embodiment, the high-temperature properties of the Al alloy due to the formation of the second compound phase can be more remarkably improved.

Further, Mg may preferably be contained at 0.2-2.5% in an embodiment and 0.6-1.8% in another embodiment. Mg is an element that is effective in improving the strength (in particular, room-temperature strength) of the Al alloy. If the content of Mg is unduly low, this effect cannot be satisfactorily obtained, while if the content of Mg is unduly high, the expandability and/or workability of the Al alloy may be reduced.

In consideration of the above, the Al alloy according to the present invention preferably comprises 2-7% Fe, 0.2-1.5% Zr, 0.15-1.2% Ti, and the balance of A1 and incidental impurities. In an embodiment, the mass ratio of Zr to Ti (Zr/Ti) may preferably be 1.1-1.5. In an embodiment, the Al alloy may contain 0.2-2.5% Mg and other modifying elements.

The "modifying elements" refer to elements, other than Al, Fe, Zr, Ti, and Mg, which are effective in improving the properties (such as strength, hardness, toughness, ductility, and dimensional stability) of the Al alloy. Specific examples of the modifying elements include Cr, Co, Mn, Ni, Sc, Y, La, V, Hf, and Nb. In general, the content of each element is very small. As will be understood, the "incidental impurities" are impurities that are difficult to remove because of the cost or technical reason or other reasons, such as impurities contained in the molten raw material and impurities mixed in each step. Examples of the incidental impurities include silicon (Si).

### (2) Metallographic Structure

The Al alloy according to the present invention may preferably be composed of a composite structure that includes at least a mother phase of A1 (α-Al phase), an Al-Fe-based intermetallic compound phase (first compound phase), and an Al-(Zr, Ti)-based intermetallic compound (second compound phase).

In particular, the second compound phase may preferably be in a nanoparticle-like form in which the Zr concentration is high in the central portion while the Ti concentration is high in the outer shell portion. In other words, it is preferred that the concentrations of Zr and Ti in Al₃(Zr, Ti) vary with inclination from the central portion to the outer shell. Such a second compound phase may readily be formed when the mass ratio (Zr/Ti) is within the above-described range.

The average size of the second compound phase may preferably be 1-30 nm in an embodiment, 2-20 nm in another embodiment, and 3-15 nm in still another embodiment. If the average size is unduly small or large, the effect of improving the high-temperature properties of the Al alloy due to the second compound phase may deteriorate. The average size refers to a value obtained through observing samples randomly sampled from the Al alloy using a transmission electron microscope (TEM) and analyzing the average diameter of 30 or more dispersed second compound phases using an image processing method.

The Al alloy (as well as expanded material) according to the present invention, which is composed of a fine metallographic structure as described above, has excellent high-temperature properties and can exhibit high plastic workability in a wide temperature range. For example, the working temperature can be within a range of room temperature (RT) to 400°C and the working ratio can be 10-90%. The piston according to the present invention can therefore be excellent not only in the strength, durability, and other similar properties but also in the productivity, degree of freedom in designing, and other similar properties.

### «Manufacturing of Expanded Material»

The expanded material according to the present invention can be obtained, for example, in the following manner. First, an alloy melt prepared to have the above-described Al alloy composition is rapidly cooled and solidified at a cooling speed of 100°C/sec or higher to obtain a solidified body (such as powder and laminar pieces). A compact (billet) composed of the solidified body and having a desired shape is subjected to hot plastic working at 300-500°C. The expanded material according to the present invention is thus obtained. The hot plastic working (expanding work) as referred to herein may be, for example, extrusion, drawing, rolling, upsetting, etc.

The expanded material (original material) thus obtained may be further subjected to plastic working, such as forging. The plastic working as used herein may be cold working or may also be hot working. In particular, the Al alloy according to the present invention is excellent in the high-temperature properties, as described above, and the working temperature can therefore be adjusted within a range of room temperature to 450°C. The working ratio at the time of working can be adjusted within a range of 10-90%. When forming a forged piston or the like, it may be preferred to set the forging temperature at 150-400°C and the working ratio at 40-80% to ensure the forging ability and mechanical properties.

### «Usage»

According to the present invention, a member (in particular, forged member) having a complex shape can be relatively readily obtained. For example, by bonding a first member and a second member, it is possible to provide a hollow member (bonded member) having a hollow part (in particular, hollow part in which at least a part is a closed space), which would be difficult to form by plastic working and mechanical working. As will be understood, the hollow part formed in the bonded member may be a plurality of hollow parts (the same applies to a cooling channel, which will be described later). Such a plurality of hollow parts may be in a state in which at least some of the hollow parts are connected to one another or may also be in a state in which all of the hollow parts are isolated.

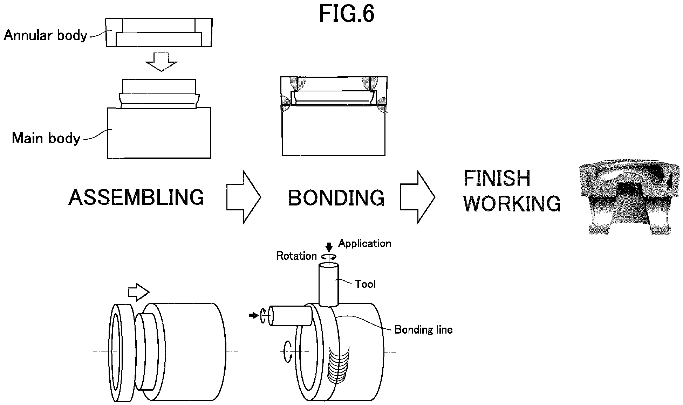

Examples of such a hollow member include a piston having a cooling channel (hollow part). FIG. 6 demonstrates a process of manufacturing a forged piston with a cooling channel by performing FSW between a main body (first member) composed of a forged material and an annular body (second member).

It should be noted that such a forged piston with a cooling channel may be incorporated in any of a spark-ignition engine (such as a gasoline engine) and a compression ignition engine (such as a diesel engine). It may preferably be used in a diesel engine because the top surface temperature of a piston tends to be high.

### [Examples]

Samples (bonded members) were each manufactured through bonding a pair of Al alloy plate materials (expanded materials/members to be bonded) to each other by FSW in an abutting manner, and the mechanical properties, hardness distribution in the vicinity of the bonding site, or metallographic structure, etc. were evaluated. On the basis of the results thus obtained, the present invention will be described further in detail.

### «Members to be bonded»

(1) Plate materials (extruded materials) having the following alloy composition were prepared as the members to be bonded in an abutting manner. The component composition is listed on the assumption that the Al alloy as a whole is 100 mass% (here and hereinafter).

   Alloy 1: Al-5%Fe-1%Zr-0.8% Ti-1.5%Mg

   Specific manufacturing process for the plate materials is as follows. First, a melt of the Al alloy having the above composition was prepared (melt preparation step). The alloy melt was sprayed in a vacuum atmosphere to obtain an air-atomized powder (solidified body) (solidification step). Particles of the obtained air-atomized powder (air-atomized particles) were classified to obtain an atomized powder having a particle diameter of 150 µm or less. The relationship between the size of powder particles obtained by air-atomizing and the cooling speed is known, and the above atomized powder can be said to be particles that are rapidly cooled and solidified at a cooling speed of 10⁴°C/sec or higher.
   The atomized powder was molded by cold isostatic pressing (CIP) to obtain a billet (raw original material) of ϕ200 mm×250 mm having a relative density of 85%. The billet was loaded into the container of an extruder and extrusion molding was performed at 370°C (hot plastic working). The extrusion ratio (cross-sectional area before extrusion/cross-sectional area after extrusion) at that time was 10. The extruded material (expanded material) thus obtained was subjected to hot forging (350°C) using a 600-ton hydraulic pressing machine. Each plate material (forged material) having a desired shape was thus obtained (forging step).
(2) Plate materials (commercially-available JIS standard products) composed of Al alloys as listed below were also prepared as the members to be bonded for the use in comparative samples. They are all typical heat-treatment-type Al alloys, such as used for extruded materials.
   Alloy C1: A6N01 (A6005C) T1
   Alloy C2: A6N01T6
   Alloy C3: A6022T6

### «FSW»

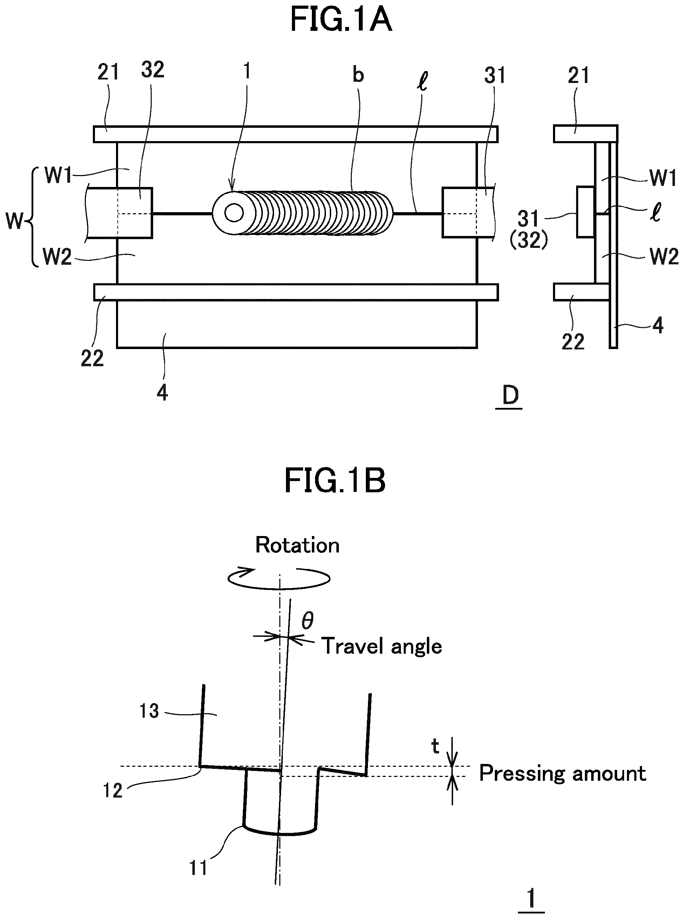

FSW was performed for various types of the members to be bonded, using a bonding apparatus D as illustrated in FIG. 1A and FIG. 1B (both are simply referred to as "FIG. 1" in a collective term). As illustrated in FIG. 1A, the bonding apparatus D is composed of guides 21 and 22, clamps 31 and 32, a bonding tool 1 (simply referred to as a "tool 1"), and a back plate 4. The guides 21 and 22 come into contact with outer end surfaces of workpieces W1 and W2 that are a pair of members to be bonded (both are simply referred to as "workpieces W" in a collective term), and hold the workpieces W in a state in which end surfaces to be bonded of the workpieces W abut against each other. The clamps 31 and 32 restrain the workpieces W at both end parts of a line to be bonded 1 that is formed by abutting of the end surfaces to be bonded of the workpieces W. The back plate 4, which is disposed at the opposite side to the tool 1, supports the workpieces W from the back surface side.

As illustrated in FIG. 1B, the tool 1 includes a probe 11, a shoulder 12, and a shank 13 that are integrally formed. The probe 11 is formed with a reverse thread. The shank 13 is attached to a tool holder of an FSW apparatus (not illustrated). The FSW apparatus operates to press the tool 1 into the workpieces W while rotating the tool 1. This operation allows the probe 11 to make its way into the line to be bonded 1 of the workpieces W while rotating. The FSW apparatus also operates to move the tool 1 along the line to be bonded 1 in a state in which the tool 1 inclines by a travel angle (θ) with respect to the outermost surfaces of the workpieces W. A bonding site is thus formed along the trajectory of the tool 1 moving, and the workpieces W are bonded to each other.

In the present examples, unless otherwise stated, bonding conditions were as follows: a probe of M5×5 (mm); a shoulder of ϕ12 mm; a travel angle (θ) of 3°; a pressing amount (t) of the shoulder of 0.2 mm; a tool rotating speed of 1500 rpm; a feed speed of 100 mm/min; a length to be bonded of 50 mm; and each member to be bonded of 20×100×4 (mm). The back plate was made of the same material as that of the members to be bonded.

### «High-temperature Properties»

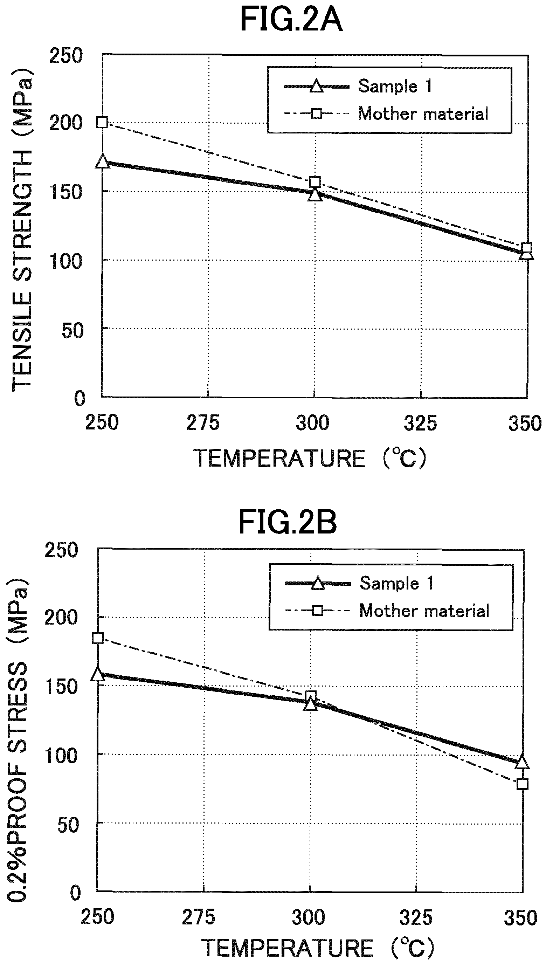

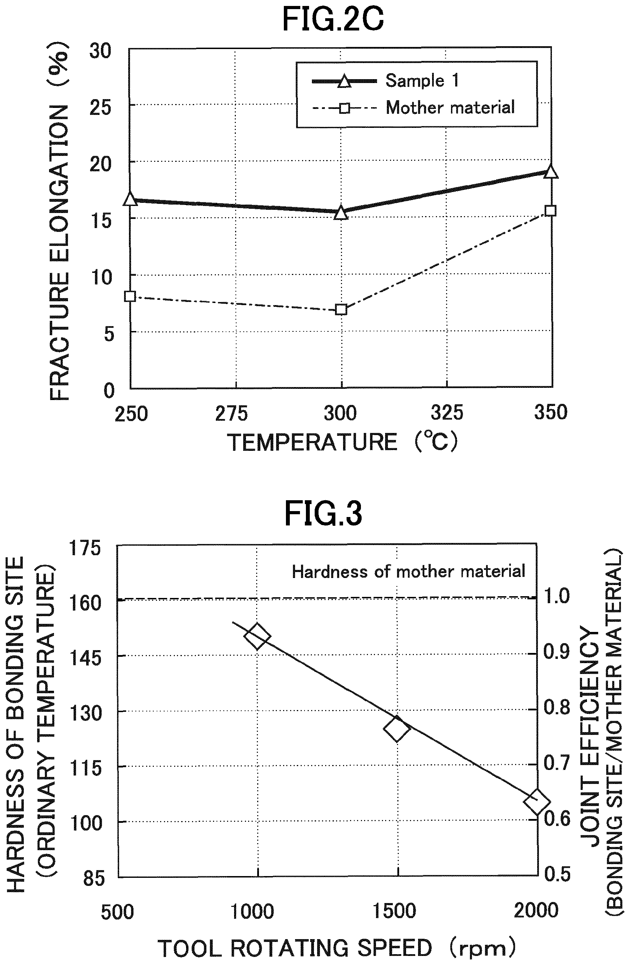

Plate materials (workpieces W) of Alloy 1 were bonded using the FSW apparatus. A tensile test specimen was cut out from the bonded member thus obtained (Sample 1) such that the bonding site was disposed at the middle of Sample 1, and the mechanical properties (tensile strength, 0.2% proof stress, and fracture elongation) were measure within each temperature region. Results are illustrated in FIG. 2A to FIG. 2C (these are simply referred to as "FIG. 2" in a collective term). For reference, the mechanical properties of each plate material itself (mother material) composed of Alloy 1 within each temperature region are also illustrated in the figures.

As apparent from FIG. 2A and FIG. 2B, when the temperature is 300°C or higher, the strength of Sample 1 is approximately the same as the strength of the mother material itself. Even when the temperature is lower than 300°C, the strength of Sample 1 is 80-90% of the strength of the mother material. It has thus been found that Sample 1 exhibits sufficient strength both in the low-temperature region and the high-temperature region.

Moreover, as apparent from FIG. 2C, the elongation of Sample 1 is about twice the elongation of the mother material within the entire temperature region. It has thus been found that Sample 1 exhibits high ductility from the low-temperature region to the high-temperature region.

### «Tool Rotation Speed and Joint Efficiency»

Plate materials of Alloy 1 were bonded at a tool rotating speed of 1000 rpm, 1500 rpm, or 2000 rpm. The hardness of the bonding site and the hardness of the mother material of each bonded member were measured in a room temperature (ordinary temperature). The hardness of the bonding site was measured at the middle position in the depth direction (plate thickness direction) on the bonding center. The hardness of the mother material was measured at a position (e.g. position separate from the bonding center by 20 mm) that was not affected by the bonding site. Results thus obtained are illustrated in FIG. 3.

As apparent from FIG. 3, it has been found that the hardness of the bonding site and the joint efficiency increase as the tool rotating speed decreases. From this result, it can be said that the tool rotating speed is preferably, for example, 750-1250 rpm.

### «Hardness Distribution»

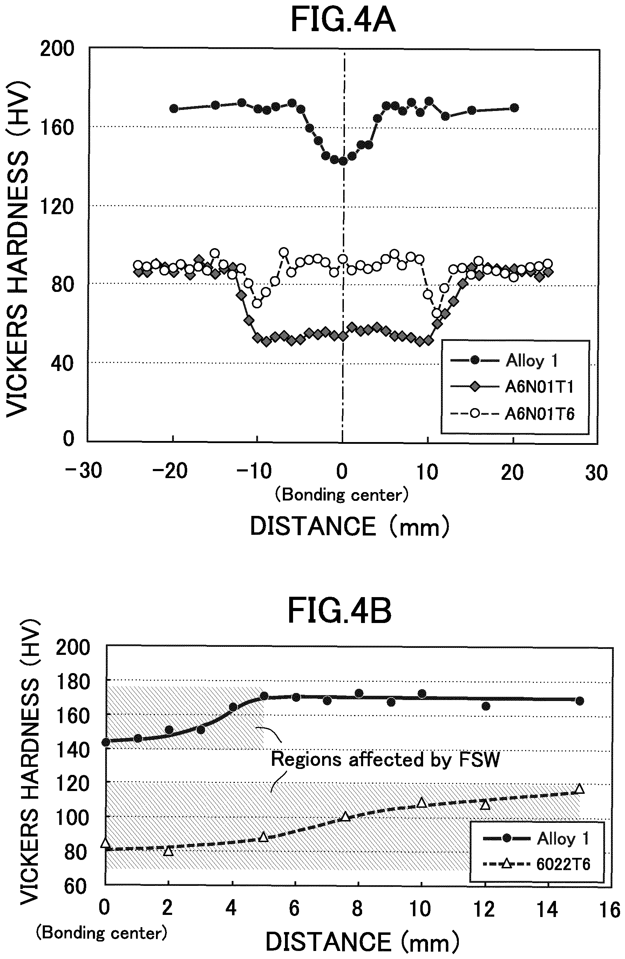

Plate materials (workpieces W) of Alloy 1 and Alloys C1 to C3 were bonded using the FSW apparatus to obtain samples and each sample was measured in terms of the hardness distribution in the vicinity of the bonding center within the room temperature region. Results are illustrated in FIG. 4A and FIG. 4B (both are simply referred to as "FIG. 4" in a collective term). In a comparison of the sample of Alloy 1 with other samples, it has been found that the heat-affected site is considerably small, the hardness of the bonding site is sufficiently high, and the reduction of hardness with respect to the mother material is very small.

In particular, as apparent from FIG. 4B, the region affected by FSW (i.e. region in which the strength of mother material deteriorates) is within about 15 mm from the bonding center at each side of the sample of Alloy C3 whereas about 5 mm from the bonding center at each side of the sample of Alloy 1. It can thus be said that, when using Alloy 1, the region affected by FSW (width in the direction perpendicular to the bonding center) is about 1/3 as compared with the case of using conventional Al alloys.

In consideration of the probe diameter (d: 5 mm), it can also be said that the region affected by FSW is about 2d in the sample of Alloy 1 whereas about 6d in the sample of Alloy C3. It can thus be said that, when using Alloy 1, the region affected by FSW (width in the direction perpendicular to the bonding center) can be suppressed to 1d-4d in an embodiment and 1.5-3d in another embodiment as the width at the middle position of the bonding center.

### «Structural Observation»

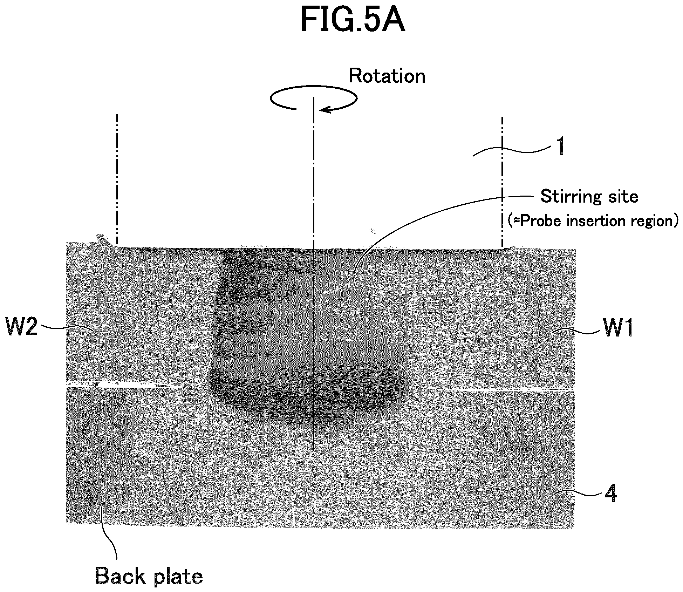

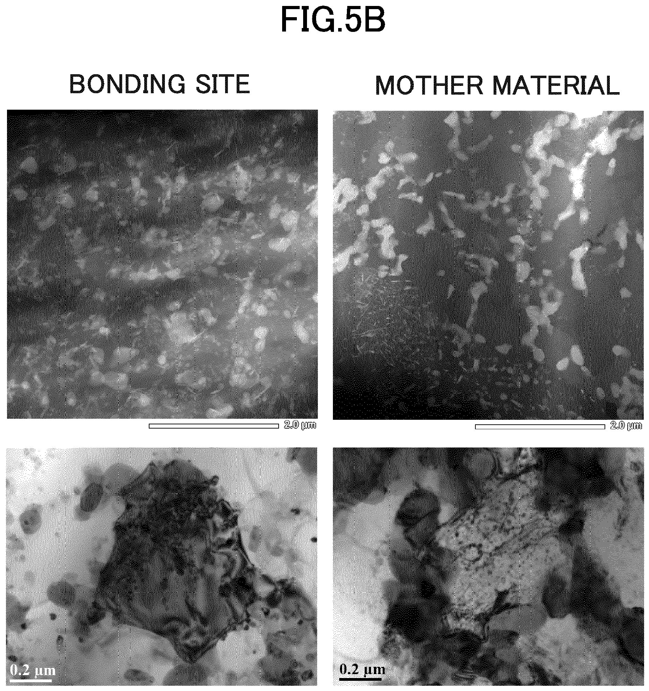

For the sample of Alloy 1, the cross section in the vicinity of the bonding site was observed using a metallographic microscope. This appearance is illustrated in FIG. 5A. In addition, the middle part of the bonding center and the mother material were observed using a scanning electron microscope (SEM). These SEM images are illustrated in FIG. 5B.

First, as apparent from FIG. 5A, it has been found that the stirring site formed in the bonding site approximately coincides with the prove insertion region in the case of the sample of Alloy 1. This appears to be because the mother material of Alloy 1 has excellent high-temperature strength.

Second, as apparent from FIG. 5B, compound phases (white portions in the photographs) in the bonding site are finer than those in the mother material. Such a fine structure appears to allow the sample of Alloy 1 to exhibit high ductility.

From the above specific examples, it has been confirmed that the bonded member composed of the Al alloy according to the present invention has a high joint efficiency and excellent high-temperature properties and is thus suitable, for example, for a forged piston with a cooling channel, etc.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method of manufacturing a bonded member, the method comprising a bonding step of performing friction stir welding of at least a first member and a second member,
at least one of the first member and the second member comprising an expanded material of an aluminum alloy,
wherein, when the aluminum alloy as a whole is 100 mass% (simply referred to as "%"), the aluminum alloy comprises:
2-7% Fe;
0.2-1.5% Zr;
0.15-1.2% Ti; and
balance of A1 and incidental impurities.

2. The method of manufacturing a bonded member as recited in claim 1, wherein the aluminum alloy further comprises 0.2-2.5% Mg.

3. The method of manufacturing a bonded member as recited in claim 1, wherein the bonding step is a step of continuously bonding an abutting site between an end part of the first member and an end part of the second member or a step of intermittently bonding an overlapping site between a surface part to be bonded of the first member and a surface part to be bonded of the second member.

4. The method of manufacturing a bonded member as recited in any one of claims 1 to 3, wherein the bonding step includes a step of setting a rotating speed of a tool having a shoulder and a probe at 750-1750 rpm, wherein the shoulder abuts against a surface of the first member or the second member and the probe protrudes from the shoulder and can be buried into a site to be bonded between the first member and the second member.

5. The method of manufacturing a bonded member as recited in claim 4, wherein the bonding step is a step of continuously bonding an abutting site between an end part of the first member and an end part of the second member and the bonding step includes a step of setting a feed speed of the tool at 50-1000 mm/min and a travel angle of the tool at 1-5° when moving the tool along the abutting site.

6. The method of manufacturing a bonded member as recited in any one of claims 1 to 5, wherein the bonded member has a hollow part formed due to bonding between the first member and the second member.

7. The method of manufacturing a bonded member as recited in claim 6, wherein
the first member and the second member are forged materials of the aluminum alloy,
the bonded member is a forged piston, and
the hollow part is a cooling channel.

8. A bonded member comprising:
a first member;
a second member; and
a bonding site obtained by friction stir welding of the first member and the second member,
at least one of the first member and the second member comprising an expanded material of an aluminum alloy,
wherein, when the aluminum alloy as a whole is 100 mass% (simply referred to as "%"), the aluminum alloy comprises:
2-7% Fe;
0.2-1.5% Zr;
0.15-1.2% Ti; and
balance of A1 and incidental impurities.

9. The bonded member as recited in claim 8, wherein
the first member and the second member comprise forged materials of the aluminum alloy, and
the bonded member is a forged piston that involves a cooling channel formed by the first member and the second member.

10. The bonded member as recited in claim 8 or 9, wherein the bonding site has Vickers hardness of 120 HV or more.
